# EUROPÄISCHE PATENTSCHRIFT

(11) **EP 2 225 610 B1**
(45) Veröffentlichungstag und Bekanntmachung des Hinweises auf die Patenterteilung: **17.08.2011**
(21) Anmeldenummer: 08866161.6
(22) Anmeldetag: 24.12.2008
(51) Int. Cl.: G03B 21/28, H04N 9/31

(54) **VERFAHREN UND VORRICHTUNG ZUM PROJIZIEREN EINES BILDES AUF EINE PROJEKTIONSFLÄCHE**
METHOD AND DEVICE FOR PROJECTING AN IMAGE ONTO A PROJECTION SURFACE
PROCÉDÉ ET DISPOSITIF DE PROJECTION D'UNE IMAGE SUR UNE SURFACE DE PROJECTION

(30) Priorität: 28.12.2007 DE 102007063454
(43) Veröffentlichungstag der Anmeldung: 08.09.2010
(73) Patentinhaber: LDT Laser Display Technology Gmbh, 07745 Jena (DE)
(72) Erfinder: BIEHLIG, Wolfram, 07747 Jena (DE)
(74) Vertreter: Dietrich, Barbara
(86) Internationale Anmeldenummer: PCT/DE2008/002120
(87) Internationale Veröffentlichungsnummer: WO 2009/082998

(56) Entgegenhaltungen:
- WO-A-2007/046707
- DE-A1-102004 001 389
- US-A- 4 297 723
- US-A- 5 097 480

## Beschreibung

Die Erfindung betrifft ein Verfahren und eine Vorrichtung zum Projizieren eines Bildes auf eine Projektionsfläche, welches aus Bildpunkten aufgebaut ist, mit mindestens einer ein Lichtbündel aussendenden, in ihrer Intensität veränderbaren Lichtquelle und einer Auskoppeleinrichtung nach der Faser, wie sie zum Beispiel aus der DE 102004001389 B4 bekannt ist, und einer sich anschließenden Ablenkeinrichtung, die das Lichtbündel auf eine Projektionsfläche leitet. Die Ablenkvorrichtung besteht im Wesentlichen aus
- einer Scannereinheit, die zumindest aus einem Polygonspiegel und gegebenenfalls aus einem zweiachsigem Spiegel(Galvo-) besteht,
- einer geeigneten Anordnung von Umlenkspiegeln,
- aus fest oder beweglich angeordneten dichroitischen Spiegeln bzw. dichroitischen Teilern bzw. dichroitischen Filtern,
- und gegebenenfalls einem Blendensystem und einem geeigneten Umlenkspiegelsystem, der das Licht auf die Polygonfacetten des Polygonspiegels lenkt.

Eine dichroitische Einheit im Sinne der vorliegenden Erfindung ist mindestens ein dichroitischer Spiegel, dichroitischer Teiler oder dichroitischer Filter. Bei einem dichroitischen Filter handelt es sich um einen Filter für die Farbtrennung, die auf dielektrischen Interferenzen basieren. Ein dichroitischer Spiegel, als eine besondere Art von Interferenzfilter, wird in Scannern verwendet, um einen Lichtstrahl in seine RGB Anteile zu zerlegen. Er reflektiert einen bestimmten Teil des Lichtspektrums und lässt den Rest des Lichtspektrums hindurch.

Zur Videoprojektion wird ein paralleles oder nahezu paralleles Lichtbündel jeweils mit der Bild- und Farbinformation von verschiedenen Bildpunkten eines Videobildes beaufschlagt.

Bei allen bekannten Systemen für die Bilderzeugung mit Lasern wird mechanisch abgelenkt. Ablenksysteme sind aus der Laservideotechnik in verschiedenen Ausführungen bekannt. Gemeinsam ist diesen Techniken oder Systemen, dass sie zur Darstellung eines Bildes eine Matrixanordnung von Bildpunkten in einem Raster mittels eines Bündels von Laserlichtstrahlen oder einem anderen parallelen Lichtbündel erzeugen und damit eine Projektionsfläche beleuchtet wird. Das Lichtbündel wird dabei über eine zu beleuchtende Fläche über mehrere Zeilen in der so genannten Zeilenrichtung gerastert. Diese zu beleuchtende Fläche kann beispielsweise eine geeignete Projektionsfläche, wie sie als großflächige Anzeige- und Projektionssysteme hoher Bildqualität im Multimediabereich bei Großveranstaltungen oder als Werbeträger zum Einsatz kommen, oder ein ebener Bildschirm oder auch sphärische Projektionen, wie beispielsweise in die Kuppel eines Planetariums oder eine Teilzylinderfläche, wie bei manchen Flugsimulatoren, sein.

Aus der DE 43 24 849 C2 ist ein Laservideosystem bekannt, bei dem zu jedem Zeitpunkt das Lichtbündel mit unterschiedlicher Farbe und Helligkeit moduliert wird. Während es aufgrund des Rasterns unterschiedliche Bildpunkte der Fläche beleuchtet, wird es mit dem für jeden beleuchteten Bildpunkt gewünschten Informationsinhalt ausgestattet. Im Ergebnis dessen entsteht auf der Fläche ein farbiges Bild. Ein Laservideosystem dieser Art erfordert eine außerordentlich hohe Ablenkgeschwindigkeit für das Lichtbündel aufgrund der großen Anzahl von Bildpunkten. Ein sich schnell drehender Polygonspiegel wird dabei für die Zeilenablenkung und ein Schwenkspiegel für die Bildablenkung verwendet. In der DE 43 24 849 C2 ist auch eine Transformationsoptik für Zeilen- und Bildablenkung der Art beschrieben, die das gerasterte Bild verändern und insbesondere vergrößern soll. Bei derartigen Transformationsoptiken hat sich herausgestellt, dass diese bei ebenen Bildschirmen ausschließlich dann bezüglich Farbfehler und Bildverzerrungen in geeigneter Weise korrigiert werden können, wenn die Bedingung eingehalten wird, dass beispielsweise der Ausfallswinkel und der Tangens des Einfallswinkels zum Beleuchten jedes Bildpunkts in einem festen Verhältnis zueinander stehen. Die Kompensation erfolgt hierbei durch eine entsprechende Transformationsoptik. Nicht korrigiert werden dabei jedoch ein gewisser Helligkeitsabfall und eine Randverfärbung des Bildes. In manchen Fällen kommt es zu leichten rötlichen oder grünlichen Verfärbungen am linken bzw. rechten Bildrand und umgekehrt.

Die EP 1 031 866 A2 beschreibt eine Relaisoptik für ein Ablenksystem und ein entsprechendes Ablenksystem, die beide weniger aufwendig sein sollen und sich insbesondere auch bezüglich Farbfehler einfach optimieren lassen. Hierin wird eine Lösung beschrieben, die in einem einzigen optischen System eine Spiegelfläche vorsieht, die das von dem vorgegebenem Ort der ersten Scaneinrichtung durch das zuerst als erstes optische System wirksame einzige optische System fallende Lichtbündel mindestens einmal reflektiert und danach sich zurück zu dem dann als zweites optische System richtet. Statt zweier optischer Systeme wird nur ein einziges optisches System eingesetzt, welches einmal als erstes und danach als zweites optisches System wirkt. Diese Lösung ist derzeitig jedoch nicht realisierbar.

Aus verschiedenen Patent- und Literaturveröffentlichungen sind Lösungen zur Korrektur von Farbfehlern durch verschiedene Linsensysteme und der Farbkorrektur der Objektive bekannt. In der US 5,838,480 A wird eine Korrektur der chromatischen Abberation durch die dem Polygonspiegel nachgeordneten Zylinderlinsen und einem diffraktiven Element bewirkt.

JP 2001194608 A beschreibt ein Diffraktionselement in der Form eines Deckglases in Verbindung mit einem Schutzsystem, das vor dem Polygonspiegel angeordnet ist.

In JP 2001/350116 A ist wiederum eine schräge Anordnung eines diffraktiven Elementes zwischen Polygonspiegel und Linsensystem beschrieben, welches chromatische Differenzen bei Vergröβerungen vermeiden will, ohne dass Geisterbilder oder Krümmungen bei der Zeilenabtastung auftreten.

In DE 69417174 T2 (S. 19, Z.23, bis S. 20, Z.29 und S. 20, Z.18-20) ist auch eine Farbbildprojektionsvorrichtung beschrieben, bei welcher in einem der beschriebenen Ausführungsbeispiele eine optische Verzögerung zum Einsatz kommt, um eine Symmetrie von 180°Phasenverschiebung zweier Lichtstrahlen zu erreichen.

Aus DE 4041240 A1 (S.11, Z.23-31) ist weiterhin ein Projektionslinsensystem bekannt, welches eine Aberrationskorrektur, insbesondere an den Rändern der Bildwand erzielt.

Alle diese Lösungen verhindern jedoch nicht, dass es bei der eingangs beschriebenen Art von Laservideosystemen zu Helligkeitsabfall und am Rand zu einer Randverfärbung im Bild kommen kann.

Eine Lösung dieses Problems ist aus der DE 102004001389 B4 bekannt. Sie hat aber den Nachteil, dass sie nicht auf ein Faserduo oder mehrere Fasern anwendbar ist, was jedoch Voraussetzung dafür ist, um bei der Laserprojektion zwei Zeilen gleichzeitig schreiben zu können und höhere Auflösungen zu erreichen. Ein Faserduo im Sinne der vorliegenden Erfindung besteht aus zwei eng benachbarten Faserkernen. Aus beiden Faserkernen tritt jeweils ein divergentes und moduliertes Lichtbündel aus, die über die Faserauskopplung gemeinsam abgebildet werden.

Aufgabe der Erfindung ist es daher, die aus dem Stand der Technik bekannten gattungsgemäßen Verfahren bzw. Videosysteme so zu verbessern, dass der Randabfall (bessere Helligkeitshomogenität im Bild) und die Randverfärbungen bei der Videoprojektion mittels Laser minimiert, und der Helligkeitsverlauf im projizierten Bild deutlich verbessert werden.

Die Aufgabe wird erfindungsgemäß durch ein Verfahren zu Projizieren eines Bildes auf eine Projektionsfläche gemäβ Anspruch 1 gelöst,

Es ist wenigstens einer der dichroitischen Einheiten verschiebbar gestaltet. Damit können Asymetrien des Strahles bzw. der Strahlungsanteile und Bildjustierungen am projizierten Bild in geeigneter Weise vorgenommen werden. Die Verschiebung der dichroitischen Einheiten erfolgt in der Art, dass die Strahlenteile RGB oder Kombinationen davon lateral gegeneinander verschoben werden.

In einer weiteren besonderen Ausführung wird der nach der zweiten dichroitischen Einheit zusammengefügte Strahl über mindestens einen Umlenkspiegel auf die Polygonfacetten eines Polygonspiegels geleitet. Gegebenenfalls kann der zusammengefügte Strahl in einer weiteren Ausführung vorher über ein geeignetes Blendensystem gelenkt werden.

Vorzugsweise ist/sind auch der/die 100 Prozent-Spiegel verschiebbar. In einer beispielhaften Ausführung der Erfindung wird/werden ein 100 Prozent-Spiegel mit einer solchen Spiegelanordnung aus nahezu 100 Prozent-Spiegeln verwendet, dass die durch die erste dichroitische Einheit hindurch getretenen Strahlenanteile von hinten auf die zweite dichroitische Einheit gelenkt werden. In einer Ausführung wird der zuvor abgetrennte Strahlenteil auf die Vorderseite der zweiten dichroitischen Einheit gelenkt, wo auch die Zusammenfügung der Strahlenteile erfolgt.

Im Verfahren können je nach Erfordernis dichroitische Einheiten gleichen oder ungleichen Typs, d.h. mit gleicher oder differenter Reflektivität und Transmitivität, verwendet werden.

Die Erfindung betrifft auch eine Vorrichtung zum Projizieren eines Bildes auf eine Projektionsfläche gemäß des erfinderischen Verfahrens.

Die erfinderische Vorrichtung enthält die Merkmale des Anspruchs 7.

Die scannereinheit des Anspruchs 7 besteht im Wesentlichen aus einem Polygonspiegel und gegebenenfalls aus einem Umlenkspiegel, der vorzugsweise ein zweiachsiger Galvospiegel ist (in den Bildern nicht dargestellt).

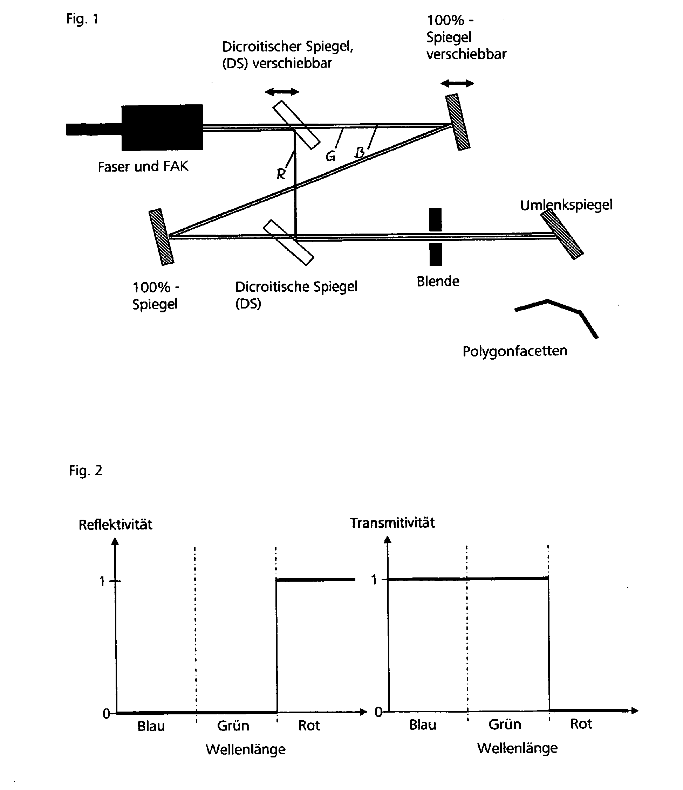

Die Fig. 1 zeigt den Prinzipaufbau des erfindungsgemäßen Verfahrens bzw. der Anordnung in einer Variante der erfinderischen Lösung. Hierbei sind die Optionen mit einem Umlenkspiegel und einem Blendensystem dargestellt. In diesem Ausführungsbeispiel wird ein dichroitischer Spiegel vom Typ A verwendet.

Die Randverfärbung bei der Laserprojektion nach dem bisher verwendeten Scanverfahren wird durch die Vignettierung (Beschneidung) des Laserstahles an den Facettenkanten des Polygonspiegels verursacht. Je nach der Qualität der Lichteinkopplung in die Lichtleitfaser, deren Zustand und deren Lage zwischen Laser und Projektionskopf, kommt es für die drei Primärfarben Rot, Grün, Blau zu mehr oder weniger großen Unterschieden im Strahlprofil nach der Faser. Diese unterschiedliche Ausprägung der Stahlprofile führt zwangsläufig zur Randverfärbung. Typisch sind solche Fälle bei denen eine Bildseite rötlich, die gegenüberliegende grünlich getönt ist. Oft ist dieser störende Effekt so stark, dass man durch Änderung des Biegezustandes der Faser eine Minimierung versuchen muss. In manchen Fällen gelingt dies aber nur unzureichend. In anderen Fällen ist die Biegung der Faser nicht möglich, da diese entweder fest verlegt oder unzugänglich ist. In den genannten Fällen entsteht eine deutliche Verbesserung durch die erfinderische Lösung.

Ausführungsformen: Mittels einer dicroitischen Einheit wird z.B. der rote Strahlanteil zunächst räumlich vom Strahl getrennt und anschließend wieder, nunmehr leicht lateral verschoben, hinzugefügt. Durch die Verschiebung eines nahezu 100 - Prozent - Spiegels (ist hier nur eine Bezeichung, die reale Reflexion liegt etwa bei 98 %) lässt sich zusätzlich zur Korrektur der Randverfärbung auch die Helligkeitsverteilung im Bild symmetrisieren (gleiche Helligkeit rechts und links im Bild). Ein wesentlicher Vorteil der dichroitischen Einheit ist seine Anwendbarkeit für Faserduos bzw. mehrere Fasern.

Fig. 2: Reflektivität und Transmitivität der beiden dichroitischen Einheiten in Figur 1 (idealisiert), im folgenden Typ A genannt. Die Reflektivität für Rot liegt bei 1, während die für Blau und Grün bei 0 liegt. Die Transmitivität liegt entsprechend für A bei 0 und für Blau und Grün bei 1.

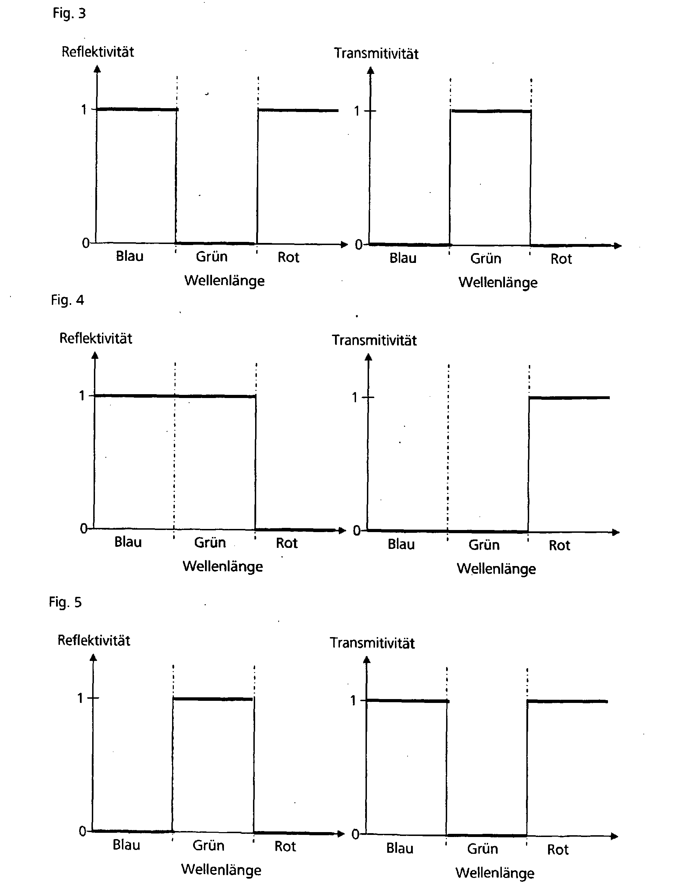

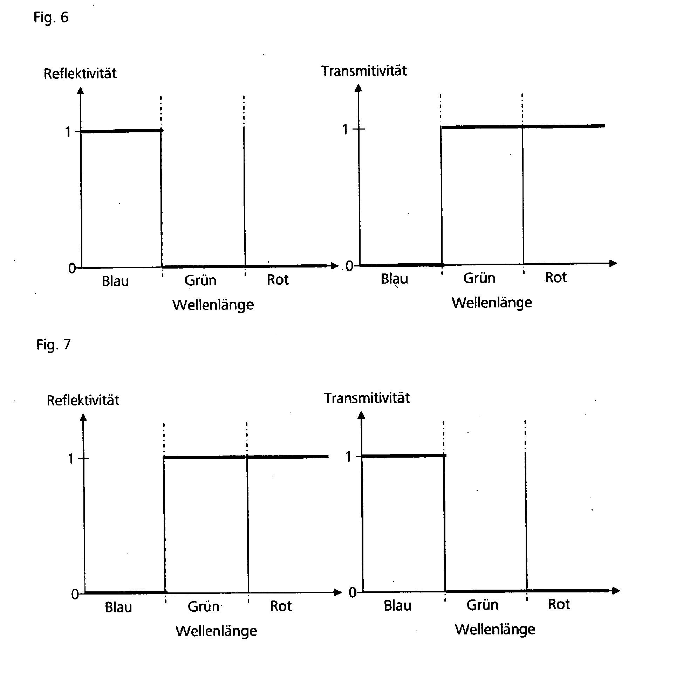

Die Figuren 3 bis 7 zeigen mögliche Ausführungen der dichroitischen Einheiten. Die erfindungsgemäß zu verwendeten dichroitischen Einheiten können für die erste und zweite Einheit vom gleichen Typ sein (A bis F). Sie können aber auch als unterschiedliche Typen verwendet werden. So kann die erste dichroitische Einheit zum Beispiel vom Typ A und die zweite dichroitische Einheit vom Typ B oder C oder D oder E oder F sein.
Fig. 3: Dichroitische Einheit vom Typ B.
Fig. 4: Dichroitische Einheit vom Typ C
Fig. 5: Dichroitische Einheit vom Typ D.
Fig. 6: Dichroitische Einheit vom Typ E.
Fig. 7: Dichroitische Einheit vom Typ F.

Es ist wichtig, die Rot - Grün - Asymmetrie im Bild zu beseitigen. In Fällen, in denen z.B. Blau nur eine untergeordnete Rolle spielt, ist es nicht unbedingt erforderlich für Blau eine gesonderte Korrektur durchzuführen. Es wäre somit auch möglich, das Verfahren bzw. die Anordnung nach Figur 1 mit einer dichroitischen Einheit vom Typ B, C oder D zu realisieren.

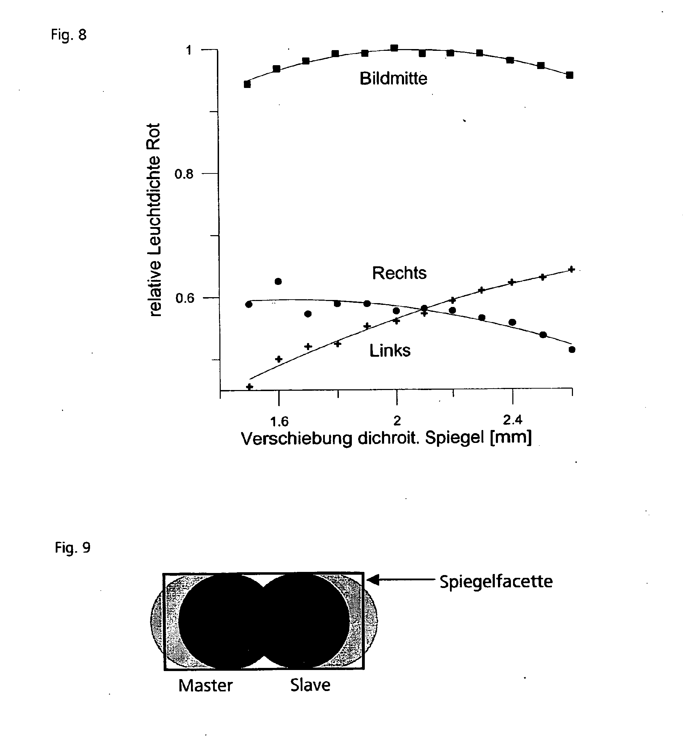

Der erwünschte Effekt der Eliminierung der Randverfärbung im Bild konnte messtechnisch nachgewiesen werden. Die Helligkeitsverteilungen für Rot und Grün/Blau lassen sich unabhängig von einander einstellen. Der Einfluss auf Rot ist in Figur 8 dokumentiert.

Fig. 8 zeigt beispielhaft die Änderung der Leuchtdichte von Rot im Bild in Abhängigkeit von der Verschiebung des dichroitischen Spiegels.

Die Messung wurde jeweils links im Bild, in der Bildmitte und rechts durchgeführt. In der Bildmitte gibt es einen Plateaubereich bei dem sich die Leuchtdichte nur gering ändert.

Rechts und links im Bild finden in diesem Bereich gegenläufige Änderungen statt, so dass eine Änderung der Randverfärbung möglich ist. Die Helligkeitsverteilung von Grün/Blau wird von dieser Verschiebung nicht verändert. Gleichzeitig lässt sich die Rot - Grün Symmetrie einstellen.

Der Strahlweg zwischen Faserauskopplung (FAK) und Polygonfacette in Figur 1 ist je nach Farbe deutlich unterschiedlich, z.B. (Rot: 255.5 mm, Grün/Blau: 433.5 mm). Dies führt bei Verwendung z.B. eines Faserduos zu unterschiedlichen Abständen von Master- und Slavestrahl auf der Facette (Rot: 0.67 mm, Grün/Blau: 1.23 mm), siehe Figur 9. Im Sinne der Erfindung wird ein Strahl 1 als Masterstrahl definiert und ergibt sich aus der entsprechenden elektronischen Ansteuerung (z.B. Ausgangskanal 1). Der als Slavestrahl bezeichnete Strahl 2 (Ausgangskanal 2) im Beispiel, ist der Strahl, der hinsichtlich der elektronischen Einstellung dem Masterstrahl angepasst werden muss. Es ist auch möglich, dass der so genannte Masterstrahl flexibel steuerbar ist und somit auch nach dem Ausgang 2 oder gegebenenfalls weiteren Ausgangskänalen (z.B. 3, 4 oder 5 usw.) ausgerichtet wird.

Fig. 9 zeigt eine Darstellung der Strahlpositionen Rot und Grün/Blau auf der Facette (nicht maßstäblich).

vorteilhaft ist es, wenn alle Teilstrahlen übereinander liegen. Die Ursache dafür dass dies nicht immer so ist, ist der Abstand der Faserkerne (z.B. beide Faserkerne bei einem Faserduo etwa 125 µm voneinander entfernt) vor der Faserauskopplung. Darüber hinaus ergeben sich Unterschiede im Abstand der verschiedenen Farben durch die unterschiedlichen optischen Weglängen in bzw. zwischen den dichroitischen Einheiten bis zur Spiegelfacette.

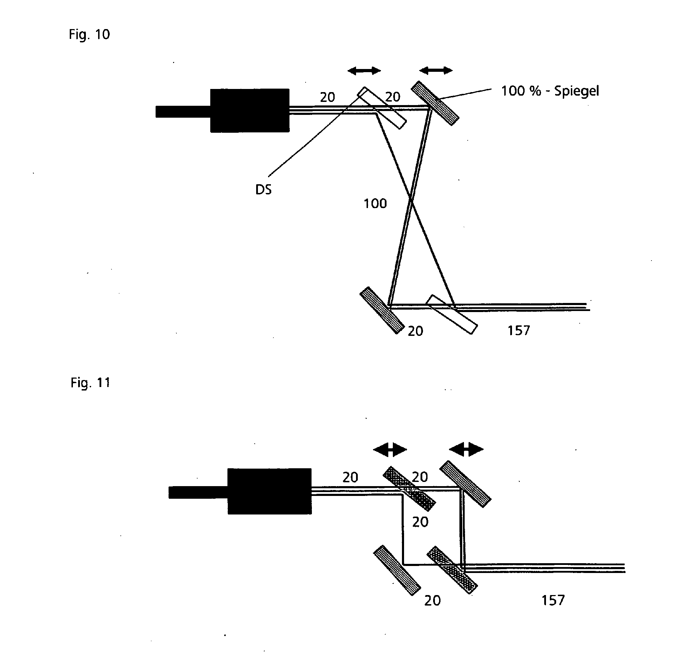

Durch die unterschiedlichen Abstände z.B. der Teilstrahlen Rot und Grün/Blau auf der Spiegelfacette (siehe Figur 9) ergibt eine Überlagerung beider Bildanteile (Master und Slave) am Bildrand möglicherweise nicht vollständig Weiß. Es kann gegebenenfalls auch hier zu einer Rot/Rot - Färbung am Rand kommen. Daher wird erfindungsgemäß in einer besonderen Ausführung eine optimale Symmetrisierung der Strahlweglängen vorgenommen, wie sie z.B. in Figur 10 dargestellt ist.

Fig. 10 zeigt eine nahezu symmetrisierte Variante der dichroitischen Einheiten.

Die optischen Weglängen in mm (20; 100; 157) sind angegeben.

Die beiden dichroitischen Einheiten können wie in Figur 1 unterschiedlichen Typs sein.

Die optischen Weglängen der Strahlenanteile sind in diesem Beispiel zueinander so angepasst werden, dass sie parallel zueinander verlaufen.

Zum Beispiel sind durch eine Version nach Figur 10 optische Wege von 277 mm und 317 mm realisierbar. Darüber hinaus würde sich die optische Weglänge im Mittel reduzieren. Die Spiegel müssten dann aber für andere Winkel ausgelegt werden (etwa: 101.5° bzw. 78.5°) und entsprechend angepasst werden.

Eine vollständige Symmetrisierung ist erfindungsgemäß auch möglich. Dazu müssen in eine besonderen Ausführungsform der Erfindung zwei verschiedene Arten von dichroitischen Einheiten eingesetzt werden. Es ergibt sich auch eine weitere Verkürzung der optischen Weglängen, siehe Figur 11.

Fig. 11: Vollständig symmetrisierte dichroitische Einheiten. Die opt. Weglänge reduziert sich auf etwa 217 mm, der Abstand von Master- und Slavestrahl beträgt demnach 0.55 m.

Ein Aufbau nach dem in Figur 11 dargestellten Prinzip ist mit folgenden Paarungen an dichroitischen Spiegeln realisierbar: A / C , C / A , B / D , D / B.

Eine weitere Ausführung der Erfindung ist ein Aufbau mit drei beweglichen Spiegeln. Es versteht sich, dass je nach Anzahl der Fasern der Aufbau, die Anordnung und Typ der dichroitisch wirkenden Einheiten entsprechend anzupassen sind und die hier genannten Beispiele nicht erschöpfend sind.

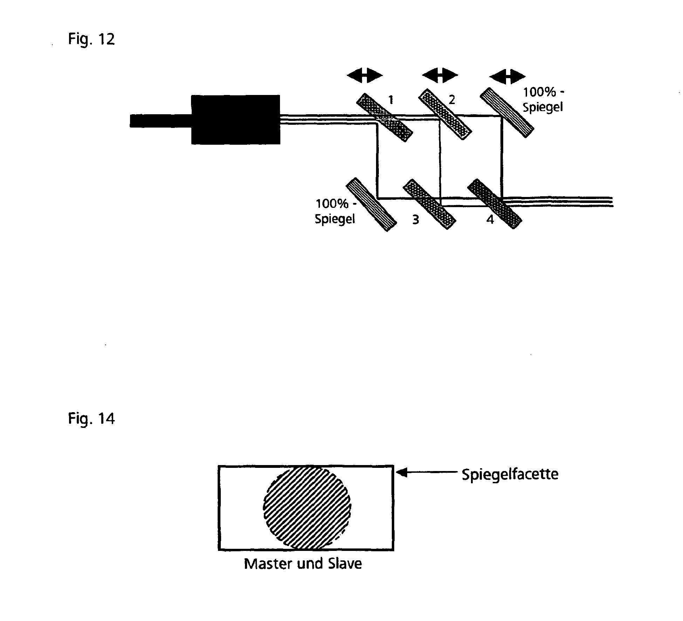

Fig. 12: Vollständig symmetrisierte dichroitische Einheit mit drei verstellbaren dichroitischen Einheiten, z.B. dichroitische Spiegel.

Der Aufbau nach Figur 12 ist mit folgenden Kombinationen aus dichroitischen Einheiten realisierbar:

| Spiegel Nr. 1 | Spiegel Nr. 2 | Spiegel Nr. 3 | Spiegel Nr. 4 |
|---|---|---|---|
| A | D oder F | D oder C | E |
| A | E oder B | E oder C | D |
| D | A oder F | A oder B | E |
| D | E oder C | E oder B | A |
| E | D oder C | D oder F | A |
| E | A oder B | A oder F | D |

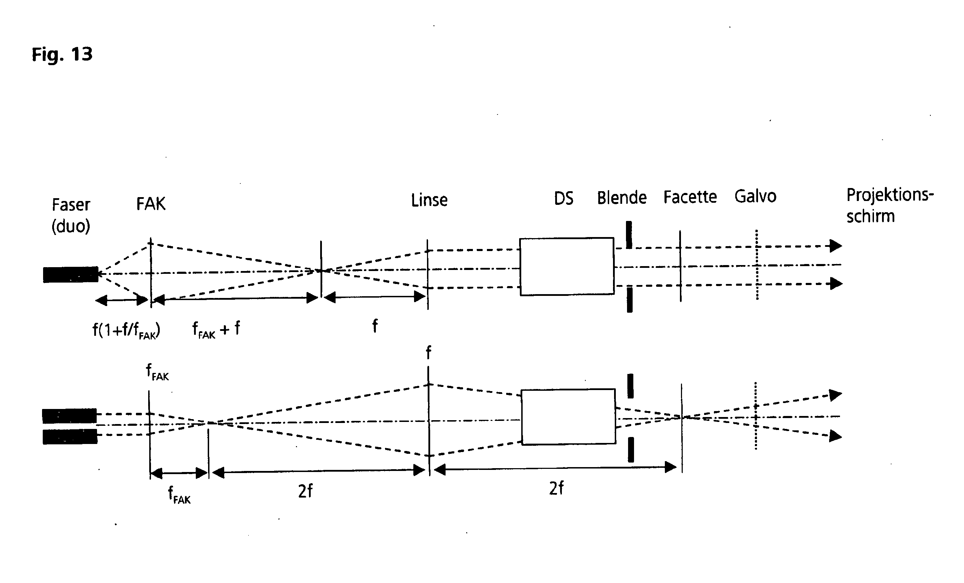

Da die optischen Weglängen der einzelnen Strahlen unabhängig von der Spiegelstellung gleich groß und unveränderlich sind, kann diese Anordnung auch mit einer zusätzlichen Optik (z.B. Linse) kombiniert werden, um den Strahlversatz zwischen Master- und Slavestrahl auf der Spiegelfacette vollständig zu eliminieren, siehe Figur 13.

Fig. 13 zeigt eine beispielhafte Kombination der vollständig symmetrisierten dichroitischen Einheit nach Figur 11 oder 12 mit einer zusätzlichen Optik. Dadurch kreuzen sich auf der Spiegelfacette die Strahlen des Faserduos. Es würde sich auf den Spiegelfacetten ein ideales Bild wie in Figur 14 ergeben. Der Winkel zwischen den Strahlen und der Strahldurchmesser auf dem Projektionsschirm bleibt dabei unverändert. Der Strahldurchmesser auf der Spiegelfacette ist so eingestellt, dass er der bisherigen Standartlösung entspricht.

Obiges Teilbild: Verhalten des Strahldurchmessers Unteres Teilbild: Strahlrichtung von Master- und Slavestrahl

Es versteht sich im Sinne der Erfindung, dass diese Ausführung auch auf mehrere Fasern, also drei, vier fünf usw. übertragbar sind.

Fig. 14 zeigt eine Darstellung des Lichtstrahles auf der Spiegelfacette bei einem Aufbau nach Figur 13. Im Gegensatz zu Figur 9 liegen alle Teilstrahlen übereinander. Dadurch können sich wesentlich bessere Bildeigenschaften ergeben.

Um parasitäre Reflexe an der 2. Fläche der dichroitischen Einheiten zu verhindern, kann diese Fläche in vorteilhafter Weise breitbandig entspiegelt werden.

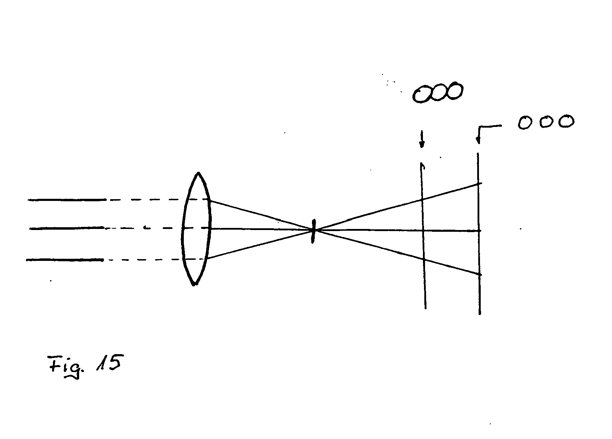

In Fig. 15 ist die prinzipielle Darstellung von einer Ausführung mit 3 Fasern, bezogen auf die Fig. 13 und 14, enthalten.

## Patentansprüche

1. Verfahren zum Projizieren eines Bildes auf eine Projektionefläche, bei der das zu projizierende Bild zeilenweise mit einem modulierten, mehrere Farbanteile enthaltenden Lichtstrahl aufgebaut wird, welcher aus mindestens einer ein Lichtbündel aussendenden, in inner intensität veränderbaren Lichtquelle gespeist wird und der Liehtstrahl durch daran gekoppelte Lichtfasereinheiten geführt wird, wobei das/die Licht bündel nach Verlassen der Lichtfasereinheit/en
- durch eine Faserauskopplungseinheit (FAK) nach der Faser geleitet wird/werden, die entlang der optischen Achse in der Art angeordnet ist/sind, dass das/die Lichtbündel
- über mindestens elne erste dichroitisch wirkende Einheit geleitet wird/werden und dabei mindestens ein Farbstrahlenanteil vom Lichtstrahl getrennt wird, wobei wenigstens eine der dichroitischen Einheiten verschiebbar gestaltet ist,
- und dieser getrennte Farbstrahlenantell direkt auf mindestens eine zweite dichroitische Einheit oder einen 100 Prozent-Spiegel gelenkt wird, so dass durch die Verschiebung der dichroitischen Einheiten die Strahlenanteile RGB oder Kombinationen davon lateral gegeneinander verschoben werden,
- während dar/die durch die erste dichroitische Einheit hindurch tretenden Farbstrahlenanteil/e über eine solche Spiegelanordnung von mindestens einem nahezu 100 Prozent-Spiegel gleichfalls auf die zweite dichroitische Einheit gelenkt wird/werden und verschoben werden kann können
und dort die nunmehr leicht verschobenen Farbstrahlenanteile derart wieder zusammengefügt werden, dass sie im Folgenden auf die Spiegelfacetten eines rotierenden Polygonspiegels geleitet und in Richtung einer Projektionsfläche abgelenkt werden und diese auf einer Projektionsfläche ein Bild projizieren.

2. Verfahren nach Anspruch 1, **dadurch gekennzeichnet, dass** 100 Prozent-Spiegel mit einer solchen Spiegelanordnung aus nahezu 100 Prozent-Spiegeln verwendet werden, die durch die erste dichroltische Einheit hindurch getretenen Strahlenanteile von hinten auf die zweite dichroitische Einheit lenken, und dass verschiebbare nahezu 100 Prozent-Spiegel verwendet werden.

3. Verfahren nach Anspruch 2, **dadurch gekennzeichnet, dass** der an der ersten dichroltlschen Einheit abgetrennte Strahlenteil auf die Vorderseite der zweiten dichroitischen Einheit gelenkt wird und dort die Zusammenfügung der beiden Strahlenteile erfolgt.

4. Verfahren nach mindestens einem der vorherigen Ansprüche 1 bis 3, **dadurch gekennzeichnet, dass** der nach der zweiten dichroitischen Einheit zusammengefügte Strahl über mindestens einen Umlenkspiegel auf die Polygonfacetten eines Polygonspiegels geleitet wird.

5. Verfahren nach mindestens einem der vorherigen Ansprüche 1 bis 4, **dadurch gekennzeichnet, dass** der zusammengefügte Strahl über ein geeignetes Blendensystem geleitet wird.

6. Verfahren nach einem der Ansprüche 1 bis 5, **dadurch gekennzeichnet, dass** die optischen Weglängen der Strahlenanteile zueinander angepasst werden und sich kreuzen oder sie parallel zueinander verlaufen, wozu die dichroitischen Einheiten und die nahezu 100 Prozent-Spiegel so zueinander angeordnet sind, dass die optischen Weglängen der Strahlenanteile sich kreuzen oder parallel zueinander verlaufen.

7. Vorrichtung zum Projizieren eines Bildes auf eine Projektionsfläche, bei der das zu projizierende Bild zeilenweise mit moduliertem, mehrere Farbanteile enthaltenden Lichtstrahl aufgebaut wird, bestehend aus
- einer nacheinander angeordneten Lichtquelle, die mindestens ein Lichtbündel aussenden kann und in ihrer Intensität veränderbar ist,
- einer daran gekoppelten Lichtfasereinheit und einer Auskoppeleinheit nach der Faser (FAK), sowie
- einer Ablenkeinrichtung, bestehend aus
o einer ersten dichroitischen Einheit, die mindestens einen Farbstrahlenanteil vom Lichtstrahl trennt , und
o einer zweiten dichroitischen Einheit, in der die Farbstrahlenanteile wieder zusammengefügt werden,
o wobei wenigstens eine der dichroitischen Einheiten verschiebbar gestaltet ist so dass durch die Verschiebung der dichroitischen Einheiten die Strahlenanteile RGB oder Kombinationen davon lateral gegeneinander verschoben werden Können und
o einem nahezu 100 Prozent-Spiegelsystem aus mindestens einem nahezu 100 Prozent-Spiegel, durch den die/der durch die erste dichroitische Einheit hindurch, tretenden Farbstrahlenenteil/e auf die zweite dichroitische Einheit gelenkt wird/werden, sowie
o einer Scannereinheit, die die zusammengefügten Lichtbündel über Spiegelfacetten eines rotierenden Polygonspiegels auf eine Projektionsfläche eines rotierenden Polygonspiegels leiten kann.

8. Vorrichtung nach Anspruch 7, **dadurch gekennzeichnet, dass** zwischen zweiter dichroitischer Einheit und Scannereinheit ein geeignetes Blendensystem und/oder ein geeigneter Umlenkspiegel angeordnet ist/sind.

9. Vorrichtung zum Projizieren eines Bildes auf eine Projektionsfläche nach Anspruch 7 oder 8, **dadurch gekennzeichnet, dass** die dichroltischen Einheiten gleichen Typs (A bis F) mit gleicher Reflektivität und Transmitivität sind.

10. Vorrichtung nach Anspruch 7 oder 8, **dadurch gekennzeichnet, dass** die erste und zweite dichroitsche Einheit ungleichen Typs, mit differenter Reflektivität und Transmitivität (A bis F) in deren Möglichkeiten der möglichen Kombinationen sind.

11. Vorrichtung nach einem der vorherigen Ansprüche 7 bis 10, **dadurch gekennzeichnet, dass** die nahezu 100 Prozent-Spiegel verschiebbar sind.

12. Vorrichtung nach einem der vorherigen Ansprüche 7 bis 11, **dadurch gekennzeichnet, dass** nach der zweiten dichroitischen Einheit mindestens ein Umlenkspiegel angeordnet ist, der die zusammengefügten Lichtbündel auf die Polygonfacetten des Polygonspiegels leiten kann und vor dem Umlenkspiegelsystem ein Blendensystem angeordnet ist.

13. Vorrichtung nach einem der Ansprüche 7 bis 12, **dadurch gekennzeichnet, dass** zwei verstellbare dichroitischen Einheiten und ein verstellbarer nahezu 100 Prozent-Spiegel verwendet werden.

14. Vorrichtung nach Anspruch 7 bis 13, **dadurch gekennzeichnet, dass** die Anordnungen eine zusätzliche Optik enthalten, die den Strahlenversatz zwischen den Strahlenanteilen eliminiert.

15. Vorrichtung nach mindestens einem der vorherigen Ansprüche 7 bis 14, **dadurch gekennzeichnet, dass** die zweite Fläche der dichroitischen Einheiten eine breitbandige Entspiegelungsschicht aufweist, wodurch an der zweiten Fläche der dichroitischen Einheiten eine breitbandige Entspiegelung vorgenommen wird.

## Claims

1. Method for projecting an image onto a projection surface, in which the image to be projected is constructed in linewise fashion by a modulated light beam which contains a plurality of colour components and is fed from at least one light source which emits a light bundle and whose intensity can be varied, and the light beam is guided through optical fibre units coupled thereto, after leaving the optical fibre units the light bundle(s)
- being guided by a fibre decoupling unit (FAK) downstream of the fibre, which is arranged along the optical axis such a way that the light bundle(s)
- is/are guided via at least a first dichroically active unit and at least one colour beam component is separated in this case from the light beam, at least one of the dichroic units being partially displaceable,
- and this separated colour beam component being directed straight onto at least one second dichroic unit or a 100 per cent mirror, so that the beam components RGB or combinations thereof are displaced laterally relative to one another by the displacement of the dichroic units,
- while the colour beam component(s) passing through the first dichroic unit can likewise be directed onto the second dichroic unit and be displaced via such a mirror arrangement of at least one virtually 100 per cent mirror,
and the now slightly displaced colour beam components are recombined there in such a way that they are subsequently guided onto the mirror facets of a rotating polygonal mirror and deflected in the direction of a projection surface, and said components project an image on a projection surface.

2. Method according to Claim 1, **characterized in that** use is made of 100 per cent mirrors which have such a mirror arrangement composed of virtually 100 per cent mirrors and which direct beam components, which have passed through the first dichroic unit, from behind onto the second dichroic unit, and **in that** displaceable virtually 100 per cent mirrors are used.

3. Method according to Claim 2, **characterized in that** the beam component separated at the first dichroic unit is directed onto the front side of the second dichroic unit, and the combination of the two beam components is performed there.

4. Method according to at least one of the preceding Claims 1 to 3, **characterized in that** the beam combined downstream of the second dichroic unit is guided onto the polygonal facets of a polygonal mirror via at least one deflecting mirror.

5. Method according to at least one of the preceding Claims 1 to 4, **characterized in that** the combined beam is guided via a suitable diaphragm system.

6. Method according to one of Claims 1 to 5, **characterized in that** the optical path lengths of the beam components are adapted to one another and cross one another, or they run parallel to one another, to which end the dichroic units and the virtually 100 per cent mirrors are arranged relative to one another in such a way that the optical path lengths of the beam components cross one another or run parallel to one another.

7. Device for projecting an image onto a projection surface, in which the image to be projected is constructed in linewise fashion by a modulated light beam containing a plurality of colour components, which device comprises
- a sequentially arranged light source which can emit at least one light bundle and whose intensity can be varied,
- an optical fibre unit coupled thereto, and a decoupling unit downstream of the fibre (FAK), and
- a deflecting device, comprising
o a first dichroic unit which separates at least one colour beam component from the light beam, and
o a second dichroic unit in which the colour beam components are recombined,
o at least one of the dichroic units being fashioned displaceably so that the beam components RGB or combinations thereof can be displaced laterally relative to one another by the displacement of the dichroic units, and
o a virtually 100 per cent mirror system composed of at least one virtually 100 per cent mirror by which the colour beam component(s) passing through the first dichroic unit is/are directed onto the second dichroic unit, and
o a scanner unit which can guide the combined light bundles onto a projection surface via mirror facets of a rotating polygonal mirror.

8. Device according to Claim 7, **characterized in that** a suitable diaphragm system and/or a suitable deflecting mirror is/are arranged between the second dichroic unit and the scanner unit.

9. Device for projecting an image onto a projection surface according to Claim 7 or 8, **characterized in that** the dichroic units are of the same type (A to F) having the same reflectivity and transmission.

10. Device according to Claim 7 or 8, **characterized in that** the first and second dichroic units are of dissimilar type, with different reflectivity and transmission (A to F) as regards their possibilities of possible combinations.

11. Device according to one of the preceding Claims 7 to 10, **characterized in that** the virtually 100 per cent mirrors are displaceable.

12. Device according to one of the preceding Claims 7 to 11, **characterized in that** arranged downstream of the second dichroic unit is at least one deflecting mirror which can direct the combined light bundles onto the polygonal facets of the polygonal mirror, and a diaphragm system is arranged upstream of the deflecting mirror system.

13. Device according to one of Claims 7 to 12, **characterized in that** use is made of two adjustable dichroic units and an adjustable virtually 100 per cent mirror.

14. Device according to Claims 7 to 13, **characterized in that** the arrangements include an additional optics which eliminates the beam offset between the beam components.

15. Device according to at least one of the preceding Claims 7 to 14, **characterized in that** the second surface of the dichroic units has a broadband antireflection layer, as a result of which a broadband antireflection coating is undertaken on the second surface of the dichroic units.

## Revendications

1. Procédé de projection d'une image sur une surface de projection, dans lequel l'image à projeter est formée ligne par ligne à partir d'un rayonnement lumineux modulé contenant plusieurs composantes de couleurs, qui est généré à partir d'une source lumineuse à intensité modifiable émettant un faisceau lumineux, le rayon lumineux étant guidé par l'intermédiaire d'unités à fibres optiques qui y sont couplées, dans lequel, après leur sortie des unités à fibres optiques, le/les faisceau(x) lumineux :
- est/sont dirigé(s) vers la fibre par l'intermédiaire d'une unité de découplage de fibres (FAK) qui est/sont disposée(s) le long de l'axe optique de telle manière que le/les faisceau(x) lumineux :
- soit/soient dirigé(s) par l'intermédiaire d'au moins une première unité à effet dichroïque et qu'au moins une composante de rayonnement colorée soit séparée du rayonnement lumineux, au moins l'une des unités dichroïques étant configurée de manière à pouvoir être décalée,
- et que ladite composante de rayonnement colorée soit directement déviée vers au moins une deuxième unité dichroïque ou vers un miroir réfléchissant à 100 pour cent, afin que les composantes de rayonnement RGB ou des combinaisons de celles-ci soient décalées latéralement les unes par rapport aux autres par décalage des unités dichroïques,
- alors que la/les composante(s) de rayonnement colorées passant à travers la première unité dichroïque est/sont également déviée(s) par l'intermédiaire d'une configuration de miroir du type constitué par au moins un miroir réfléchissant à pratiquement 100 pour cent vers la deuxième unité dichroïque et peut/peuvent être décalées,
et que les composantes de rayonnement lumineux ayant ainsi été légèrement décalées y soient de nouveau combinées de telle manière qu'elles soient ensuite dirigées vers les facettes réfléchissantes d'un miroir polygonal tournant et qu'elles soient déviées dans la direction d'une surface de projection de manière à ce qu'elles projettent une image sur une surface de projection.

2. Procédé selon la revendication 1, **caractérisé en ce qu'**on utilise des miroirs réfléchissants à 100 % comprenant un agencement de miroirs du type constitué de miroirs réfléchissants à pratiquement 100 % qui devient les composantes de rayonnement passant à travers la première unité dichroïque de l'arrière vers la deuxième unité dichroïque et **en ce qu'**on utilise des miroirs réfléchissants à pratiquement 100 % et pouvant être décalés.

3. Procédé selon la revendication 2, **caractérisé en ce que** la composante de rayonnement séparée dans la première unité dichroïque est déviée vers la face avant de la deuxième unité dichroïque et **en ce que** la combinaison des deux composantes de rayonnement y est effectuée.

4. Procédé selon au moins l'une des revendications 1 à 3, **caractérisé en ce que** le rayonnement combiné après la deuxième unité dichroïque est dirigé par l'intermédiaire d'au moins un miroir de déviation vers les facettes polygonales d'un miroir polygonal.

5. Procédé selon au moins l'une des revendications 1 à 4 précédentes, **caractérisé en ce que** le rayonnement combiné est dirigé par l'intermédiaire d'un système d'obturateur approprié.

6. Procédé selon au moins l'une des revendications 1 à 5, **caractérisé en ce que** les longueurs des chemins optiques des composantes de rayonnement sont ajustées les unes par rapport aux autres et **en ce qu'**elles se croisent ou qu'elles s'étendent parallèlement les unes aux autres, les unités dichroïques et les miroirs réfléchissants à pratiquement 100 % étant pour cela agencés les uns par rapport aux autres de telle manière que les longueurs de chemins optiques des composantes de rayonnement se croisent ou s'étendent parallèlement les uns aux autres.

7. Dispositif de projection d'une image sur une surface de projection, dans lequel l'image à projeter est formée ligne par ligne à partir d'un rayonnement lumineux modulé contenant plusieurs composantes colorées, comprenant, l'un après l'autre :
- une source lumineuse agencée de manière séquentielle, qui peut émettre au moins un faisceau lumineux et peut être soumise à une variation d'intensité,
- une unité à fibres optiques couplée à celles-ci et une unité de découplage située après la fibre (FAK), ainsi que :
- un dispositif de déviation comprenant :
o une première unité dichroïque qui sépare au moins une composante de rayonnement coloré du rayonnement lumineux, et
o une deuxième unité dichroïque dans laquelle les composantes de rayonnement sont recombinées,
o dans lequel au moins l'une des unités dichroïques est configurée de façon à pouvoir être décalée de telle manière que les composantes de rayonnement RGB, ou d'autres combinaisons de celles-ci, puissent être décalées latéralement par celle-ci les unes par rapport aux autres par décalage des unités dichroïques, et
o un système à miroirs réfléchissants à pratiquement 100 % constitué d'au moins un miroir réfléchissant à pratiquement 100 %, à travers lequel la/les composante(s) de rayonnement colorée(s) passant à travers la première unité dichroïque est/sont déviée(s) vers la deuxième unité dichroïque,
o une unité de balayage qui peut diriger le faisceau lumineux combiné par l'intermédiaire de facettes réfléchissantes d'un miroir polygonal tournant vers une surface de projection.

8. Dispositif selon la revendication 7, **caractérisé en ce qu'**un système d'obturateur approprié et/ou un miroir de déviation approprié est/sont disposé(s) entre la deuxième unité dichroïque et l'unité de balayage.

9. Dispositif de projection d'une image sur une surface de projection selon la revendication 7 ou 8, **caractérisé en ce que** les unités dichroïques sont d'un même type (A à F) avec des réflectivités et des transmissivités identiques.

10. Dispositif selon la revendication 7 ou 8, **caractérisé en ce que** les première et seconde unités dichroïques sont de types différents, avec des réflectivités et des transmissivités (A à F) différentes du point de vue de la possibilité de combinaisons possibles.

11. Dispositif selon l'une des revendications 7 à 10 précédentes, **caractérisé en ce que** les miroirs réfléchissants à pratiquement 100 % peuvent être décalés.

12. Dispositif selon l'une des revendications 7 à 11 précédentes, **caractérisé en ce qu'**après la deuxième unité dichroïque, il est prévu au moins un miroir de déviation qui peut diriger le faisceau lumineux combiné vers les facettes polygonales du miroir polygonal et **en ce qu'**un système d'obturateur est disposé avant le système de miroirs de déviation.

13. Dispositif selon l'une des revendications 7 à 12, **caractérisé en ce que** deux unités dichroïques réglables et **en ce qu'**un miroir réfléchissant à pratiquement 100 % réglable sont utilisés.

14. Dispositif selon les revendications 7 à 13, **caractérisé en ce que** les montages comprennent une optique supplémentaire qui élimine le déplacement du rayonnement entre les composantes de rayonnement.

15. Dispositif selon au moins l'une des revendications 7 à 14 précédentes, **caractérisé en ce que** les deuxièmes surfaces des unités dichroïques présentent un revêtement anti-réfléchissant à large bande au moyen duquel est effectué un traitement anti-réfléchissant à large bande sur les secondes surfaces des unités dichroïques.
